# EUROPÄISCHE PATENTSCHRIFT

(11) **EP 0 552 606 B1**
(45) Veröffentlichungstag und Bekanntmachung des Hinweises auf die Patenterteilung: **22.03.1995**
(21) Anmeldenummer: 93100121.8
(22) Anmeldetag: 07.01.1993
(51) Int. Cl.: F16B 12/24

(54) **Dübelanordnung**
Dowel arrangement
Arrangement pour une cheville

(30) Priorität: 20.01.1992 AT 74/92
(43) Veröffentlichungstag der Anmeldung: 28.07.1993
(73) Patentinhaber: Julius Blum Gesellschaft m.b.H., 6973 Höchst (AT)
(72) Erfinder: Röck, Erich, A-6973 Höchst (AT)
(74) Vertreter: Torggler, Paul, Dr.

(56) Entgegenhaltungen:
- FR-A- 1 592 374
- FR-A- 2 335 721

## Beschreibung

Die Erfindung bezieht sich auf eine Dübelanordnung für Möbelbeschläge mit einem Dübel der zweistückig ausgeführt ist, im montierten Zustand zumindestens annähernd zylindrische Form aufweist und an seinem äußeren Mantel mit Rippen od. dgl. versehen ist und einem Spannteil, der den Dübel spreizt und mit dem zu befestigenden Teil, beispielsweise einer Montageplatte verbindet, wobei der Dübel aus einem in Einsteckrichtung vorderen und einem hinteren Teilstück besteht, die durch eine schräge Trennebene geteilt sind, die die Längsmittelachse des Dübels schneidet.

Aus der AT-PS 244 042 ist ein geschlitzter Kunststoffdübel bekannt, in den eine Schraube einschraubbar ist und der zur Befestigung von Gegenständen an Wänden od. dgl. dient.

Die DE-OS 34 13 854 zeigt einen Mauerdübel mit metallischem Dübelkörper, an dem ein Spreizkeil geführt ist.

Die DE-OS 33 03 721 zeigt einen zweiteiligen Mauerdübel, der insbesondere zur Befestigung von Gegenständen an Decken geeignet ist.

Die in diesen drei Dokumenten beschriebenen Dübel können nicht zur Befestigung von Beschlägen an Spanplatten od. dgl. verwendet werden.

Ein für diesen Zweck geeigneter Dübel ist jedoch aus FR-A-2 335 721 bekannt.

Dübelanordnungen der eingangs erwähnten Art, die in der Möbelindustrie Verwendung finden, dienen zur Befestigung von Beschlägen, wie Scharnieren, Möbelverbindern u. dgl..

Für eine gute und sichere Verankerung des jeweiligen Beschlagteiles ist eine gute Verbindung bzw. Haftung des Dübels im Möbelteil und eine gute Verbindung des Dübels mit dem Beschlagteil Voraussetzung.

In letzter Zeit werden immer mehr Beschläge händisch, d. h. ohne besondere Montagemaschinen direkt beim Kunden montiert.

Aufgabe der Erfindung ist es, eine Dübelanordnung der eingangs erwähnten Art zu schaffen, die einerseits ein leichtes Einsetzen des Dübels in die Bohrung im Möbelteil erlaubt, andererseits eine gute Verspreizung, d.h. eine gute Haftung des Dübels im Möbelteil gewährleistet.

Die erfindungsgemäße Aufgabe wird dadurch gelöst, daß der Spannteil, der als Spannschraube ausgeführt ist, vom vorderen Teilstück umfanggeschlossen umfaßt wird und mit seinem Gewinde in das vordere Teilstück eingreift, während das hintere Teilstück die Spannschraube C-förmig umfaßt.

Vorteilhaft ist vorgesehen, daß das vordere Teilstück hinten seitlich einen radial und axial vorstehenden verbiegbaren Anschlaglappen aufweist und daS der Anschlaglappen in Draufsicht segmentförmig ist und das hintere Teilstück zu einem Zylinder ergänzt. Auf diese Art ist das vordere Teilstück in der unverspannten Stellung exakt positionierbar. Beim Verspannen des Dübels wird der federnde Anschlaglappen zum Teilstück gebogen.

Wenn es sich bei dem zu befestigenden Teil um einen Teil handelt, der an der Unterseite uneben ist, was beispielsweise bei Montageplatten aus Blech vorkommt, ist vorteilhaft vorgesehen, daß zwischen dem Dübel und dem zu befestigenden Teil eine vorzugsweise metallischer Ausgleichsring mit gleichem Durchmesser wie der Dübel angeordnet ist.

Nachfolgend wird ein Ausführungsbeispiel der Erfindung anhand der Figuren der Zeichnungen eingehend beschrieben.

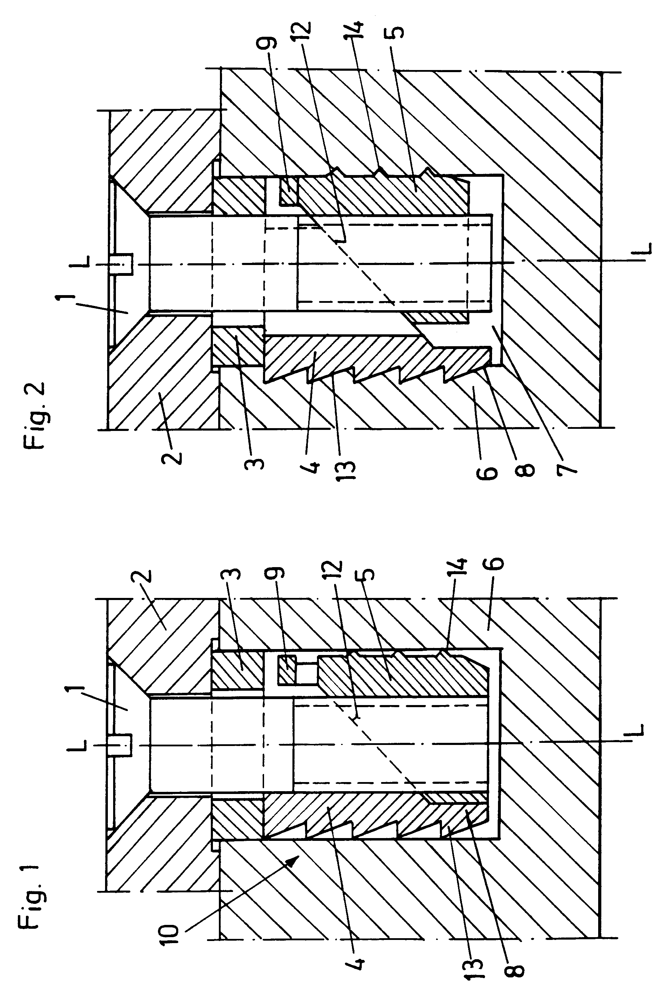

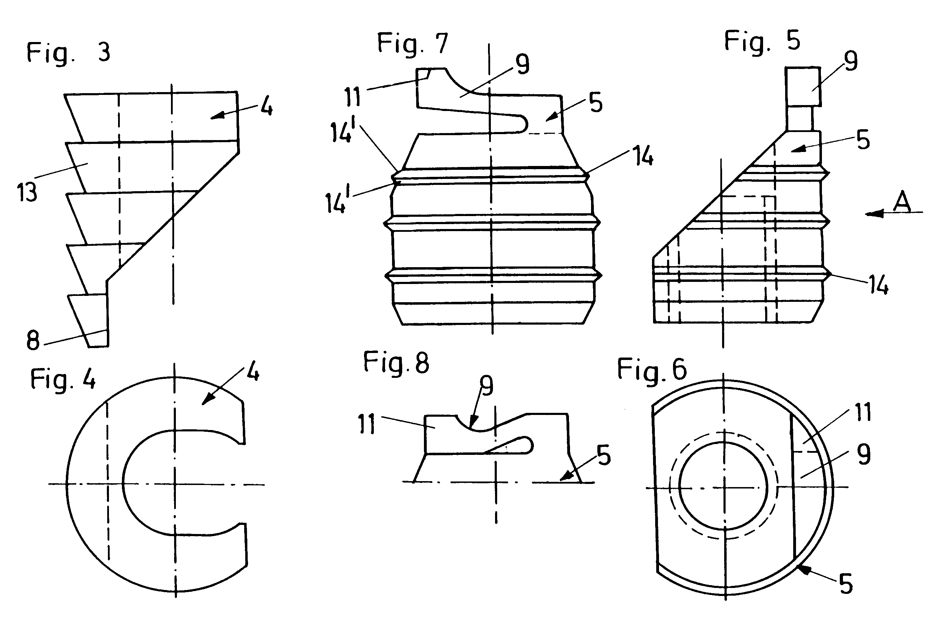

Die Fig. 1 zeigt einen Axialschnitt durch eine Dübelanordnung in der Einführstellung, die Fig. 2 zeigt einen gleichen Axialschnitt in der verspannten Stellung, die Fig. 3 zeigt eine Seitenansicht des hinteren Teilstückes, die Fig. 4 zeigt eine Draufsicht auf das hintere Teilstück, die Fig. 5 zeigt eine Seitenansicht des vorderen Teilstückes, die Fig. 6 zeigt eine Draufsicht auf das vordere Teilstück, die Fig. 7 zeigt die Ansicht A der Fig. 5 und die Fig. 8 zeigt einen Ausschnitt der Ansicht A im oberen Bereich bei verspanntem Dübel.

Im gezeigten Ausführungsbeispiel besteht die erfindungsgemäße Dübelanordnung aus dem Dübel 10 und der Spannschraube 1, einer Montageplatte 2 und einem Ausgleichsring 3.

Die Spannschraube 1 hält den Dübel 10 an der Montageplatte 2 und dient gleichzeitig zum Verspannen des Dübels 10.

Der Dübel 10 besteht aus einem vorderen Teilstück 5 und einem hinteren Teilstück 4. Beide Teilstücke 4, 5 sind in eine Bohrung 7 im Möbelteil 6 eingesetzt.

Wie aus den Fig. 4 und 6 ersichtlich, umfaßt das hintere Teilstück 4 die Spannschraube 1 C-förmig, während das vordere Teilstück 5 die Spannschraube 1 zumindest im vorderen Bereich zur Gänze umgibt, sodaß die Spannschraube in dieses Teilstück 5 eingeschraubt werden kann.

Das hintere Teilstück 4 weist vorne eine axial vorspringende Nase 8 auf, an der das vordere Teilstück 5 in der unverspannten Stellung anliegt.

Das vordere Teilstück 5 ist hinten mit einem axial- und radialförmigen Anschlaglappen 9 versehen, das an seinem freien Ende einen axialen Vorsprung 11 aufweist. Der Anschlaglappen 9 distanziert das vordere Teilstück 5 in der unverspannten Stellung von dem Ausgleichsring 3 und hält dieses in seiner korrekten Stellung in bezug auf das Teilstück 4.

In Draufsicht ist, wie aus der Fig. 6 ersichtlich, der federnde Anschlag 9 segmentförmig ausgeführt und ergänzt das Teilstück 4 zu einem geschlossenen Zylinder.

Beim Anziehen der Spannschraube 1 wird der federnde Anschlaglappen 9 zum Teilstück 5 gebogen, wie in der Fig. 8 gezeigt.

Die beiden Teilstücke 4 und 5 sind vorteilhaft aus Kunststoff gefertigt.

Die Trennebene 12 zwischen den beiden Teilstücken schneidet die Längsmittelachse L der Dübelanordnung und verläuft zu dieser in einem schrägen Winkel. Dadurch werden die Teilstücke 4, 5 beim Anziehen der Spannschraube 1 nicht nur axial, sondern auch radial versetzt, wodurch sie in die Seitenwandung der Bohrung 7 eingepreßt werden.

Die beiden Teilstücke 4, 5 sind an ihrer Außenwand mit unterschiedlichen Rippen 13, 14 zu sehen. Die Rippen 13 des Teilstückes 4, das beim Verspannen nicht in Axialrichtung bewegt wird, sind in herkömmlicher Weise tannenzapfenförmig. Die Rippen 14 des Teilstückes 5, das beim Verspannen sowohl radial als auch axial bewegt wird, weisen hintere und vordere Schrägflächen 14' auf, sodaß beim Anziehen des Teilstückes 5 die Wandung der Bohrung 7 nicht verletzt wird. Die Rippen 14 entsprechen im Querschnitt einem gleichschenkeligen Dreieck.

## Patentansprüche

1. Dübelanordnung für Möbelbeschläge mit einem Dübel der zweistückig ausgeführt ist, im montierten Zustand zumindestens annähernd zylindrische Form aufweist und an seinem äußeren Mantel mit Rippen od. dgl. versehen ist und einem Spannteil, der den Dübel spreizt und mit dem zu befestigenden Teil, beispielsweise einer Montageplatte verbindet, wobei der Dübel aus einem in Einsteckrichtung vorderen und einem hinteren Teilstück besteht, die durch eine schräge Trennebene geteilt sind, die die Längsmittelachse des Dübels schneidet, dadurch gekennzeichnet, daß der Spannteil, der als Spannschraube (1) ausgeführt ist, vom vorderen Teilstück (5) umfanggeschlossen umfaßt wird und mit seinem Gewinde in das vordere Teilstück (5) eingreift, während das hintere Teilstück (4) die Spannschraube (1) C-förmig umfaßt.

2. Dübel nach Anspruch 1, dadurch gekennzeichnet, daß das hintere Teilstück (4) in an sich bekannter Weise vorne eine axial vorspringende Nase (8) aufweist, an der das vordere Teilstück (5) in der überspannten Stellung anliegt.

3. Dübel nach Anspruch 1, dadurch gekennzeichnet, daß das vordere Teilstück (5) hinten seitlich einen radial und axial vorstehenden verbiegbaren Anschlaglappen (9) aufweist.

4. Dübel nach Anspruch 3, dadurch gekennzeichnet, daß der Anschlaglappen (9) in Draufsicht segmentförmig ist und das hintere Teilstück (4) zu einem Zylinder ergänzt.

5. Dübel nach Anspruch 3 oder 4, dadurch gekennzeichnet, daß der Anschlaglappen (9) an seinem freien Ende einen axialen Vorsprung (11) aufweist.

6. Dübel nach einem der Ansprüche 1 bis 5, dadurch gekennzeichnet, daß zwischen dem Dübel (10) und dem zu befestigenden Teil (2) ein vorzugsweise metallischer Ausgleichsring (3) mit gleichem Durchmesser wie der Dübel (10) im montierten Zustand angeordnet ist.

7. Dübel nach einem der Ansprüche 1 bis 5, dadurch gekennzeichnet, daß die beiden Teilstücke (4, 5) Rippen (13, 14) mit unterschiedlichem Querschnitt aufweisen.

8. Dübel nach Anspruch 7, dadurch gekennzeichnet, daß die Rippen (13) des hinteren Teilstückes (4) ein Tannenzapfenprofil bilden und der Querschnitt der Rippen (14) des vorderen Teilstückes (5) einem gleichschenkeligen Dreieck entspricht.

## Claims

1. Dowel arrangement for furniture fittings, having a dowel which is constructed in two parts, has an at least approximately cylindrical shape in the assembled state and is provided with ribs or the like on its outer casing, and a tensioning part which spreads the dowel and connects it to the part to be secured, for example an assembly plate, the dowel comprising a front section and a rear section, as seen in the direction of insertion, which are divided by an oblique separating plane which intersects the longitudinal centre axis of the dowel, characterized in that the tensioning part, which is constructed as a tensioning screw (1), is surrounded in peripherally closed manner by the front section (5) and engages into the front section (5) by means of its thread, while the rear section (4) surrounds the tensioning screw (1) in the shape of a C.

2. Dowel according to Claim 1, characterized in that the rear section (4) has in a manner known per se at the front an axially projecting lug (8) against which the front section (5) bears in the overtensioned position.

3. Dowel according to Claim 1, characterized in that the front section (5) has at the rear and laterally a radially and axially projecting flexible stop tab (9).

4. Dowel according to Claim 3, characterized in that the stop tab (9) is segment-shaped in plan view and completes the rear section (4) to form a cylinder.

5. Dowel according to Claim 3 or 4, characterized in that the stop tab (9) has an axial projection (11) at its free end.

6. Dowel according to one of Claims 1 to 5, characterized in that a preferably metal compensation ring (3) with the same diameter as the dowel (10) in the assembled state is arranged between the dowel (10) and the part (2) to be secured.

7. Dowel according to one of Claims 1 to 5, characterized in that the two sections (4, 5) have ribs (13, 14) with different cross-sections.

8. Dowel according to Claim 7, characterized in that the ribs (13) of the rear section (4) form a fir-cone profile and the cross-section of the ribs (14) of the front section (5) corresponds to an equilateral triangle.

## Revendications

1. Arrangement de cheville pour fournitures pour meubles, comportant une cheville qui est conçue en deux pièces, qui présente, à l'état monté, une forme au moins approximativement cylindrique et qui est pourvue sur son enveloppe extérieure de nervures ou similaires, et un élément de serrage qui écarte la cheville et l'assemble à l'objet à fixer, par exemple une plaque de montage, la cheville étant composée dans le sens d'insertion d'une section avant et d'une section arrière, lesquelles sections sont séparées par un plan de séparation oblique coupant la ligne médiane longitudinale de la cheville, caractérisé en ce que l'élément de serrage, qui se présente sous forme de vis de serrage (1), est entouré sur toute la circonférence par la section avant (5) et engrène avec son filetage dans la section avant (5), tandis que la section arrière (4) entoure en forme de C la vis de serrage (1).

2. Cheville selon la revendication 1, caractérisée en ce que la section arrière (4) présente de façon connue en soi à l'avant un ergot (8) saillant axialement, auquel adhère la section avant (5) dans la position de serrage.

3. Cheville selon la revendication 1, caractérisée en ce que la section avant (5) présente à l'arrière sur le côté une languette de butée (9) déformable dépassant radialement et axialement.

4. Cheville selon la revendication 3, caractérisée en ce que la languette de butée (9) se présente, vue de dessus, sous forme de segment et complète la section arrière (4) pour en faire un cylindre.

5. Cheville selon la revendication 3 ou 4, caractérisée en ce que la languette de butée (9) présente à son extrémité libre une saillie (11) axiale.

6. Cheville selon l'une quelconque des revendications 1 à 5, caractérisée en ce qu'entre la cheville (10) et l'objet à fixer (2) est disposée une bague de compensation (3), de préférence métallique, ayant le même diamètre que la cheville (10) à l'état monté.

7. Cheville selon l'une quelconque des revendications 1 à 5, caractérisée en ce que les deux sections (4, 5) comportent des nervures (13, 14) de coupes transversales différentes.

8. Cheville selon la revendication 7, caractérisée en ce que les nervures (13) de la section arrière (4) forment un profil de tenon en sapin et que la coupe transversale des nervures (14) de la section avant (5) correspond à un triangle équilatéral.
